# EUROPEAN PATENT APPLICATION

(11) **EP 4 475 109 A1**
(43) Date of publication of application: **11.12.2024**
(21) Application number: 23177757.4
(22) Date of filing: 06.06.2023
(51) Int. Cl.: G09B 19/00

(54) **MANNEQUIN HEAD**

(71) Applicant: Kao Germany GmbH, 64297 Darmstadt (DE)
(72) Inventor: Zeiter, Frank, 64297 Darmstadt (DE); Schlinkert, Sabine, 64297 Darmstadt (DE)
(74) Representative: Miller, Tobias

(57) **Abstract**

A mannequin head for facilitating hairstyling training is disclosed. The mannequin head includes a face structure adapted to depict a human face and including an engagement structure, and a scalp structure including a plurality of hair strands removably coupled to the face structure. The scalp structure includes a retention structure removably engaged with the engagement structure to removably couple the scalp structure with the face structure. The engagement structure includes one of a protrusion or a ring arranged at a rear of the face structure and the retention structure includes other of the protrusion or the ring.

## Description

### TECHNICAL FIELD

The present disclosure relates, generally, to a mannequin head, and more particularly to a mannequin head having a disposable scalp structure for facilitating hairstyling training.

### BACKGROUND

Hairstylists provide hair care services that include cutting, trimming, and styling of hair. The hairstylists often undergo extensive training to learn the art of hairstyling. During such trainings, mannequin heads having hair strands are used. However, these mannequin heads are rendered unusable after conducting one or more trainings, leading to a wastage of material as well as increased cost of training.

### SUMMARY

One aspect of the disclosure is to provide a mannequin head for facilitating a hairstyling training is provided.

One aspect of the disclosure is to provide a mannequin head that includes a disposable scalp structure having a plurality of hair strands and adapted to be removably coupled to a face structure.

One aspect of the disclosure is to provide a mannequin head that is reused with a disposable scalp structure to reduce wastage.

These aspects and other aspects are provided by a mannequin head of claim 1. The mannequin head includes a face structure adapted to depict a human face and including an engagement structure, and a scalp structure including a plurality of hair strands removably coupled to the face structure. The scalp structure includes a retention structure removably engaged with the engagement structure to removably couple the scalp structure with the face structure. The engagement structure includes one of a protrusion or a ring arranged at a rear of the face structure and the retention structure includes other of the protrusion or the ring.

In some embodiments, the engagement structure includes the ring, and the retention structure includes the protrusion. This enables easy engagement and disengagement of the scalp structure with the face structure.

In some embodiments, the protrusion includes a cylindrical portion extending forwardly of a body of the scalp structure and a disc portion arranged at a free end of the cylindrical portion.

In some embodiments, the disc portion includes a substantially oval shape to prevent an undesired disengagement of the scalp structure and the face structure.

In some embodiments, the engagement structure includes a pair of arms connecting the ring with a body of the face structure. The arms are arranged diametrically opposite to each other and extend outwardly of the ring to the body of the face structure. The arms facilitate the engagement and disengagement of the ring with the protrusion upon application of force on a body of the face structure by transferring the force from the body to the ring.

In some embodiments, the ring is a flexible ring, and the arms are relatively rigid arms. The ring is configured to deform upon compression of the body of the face structure to enable the removal of the scalp structure from the face structure.

In some embodiments, the face structure includes a seat extending along a periphery of the body of the face structure and the scalp structure includes a lip extending along an outer edge of the body of the scalp structure and resting on the seat of the face structure. This lip and seat arrangement facilitates the engagement of the scalp structure with the face structure in a correct orientation.

Another aspect of the disclosure is to provide a scalp structure having a plurality of hair strands to facilitate hairstyling training to a person and is adapted to be removably coupled with a face structure of a mannequin head for facilitating a hairstyling training.

One aspect of the disclosure is to provide a scalp structure that can be disposed of after performing a hair dressing exercise, while allowing a use of a face structure with another similar scalp structure, thereby reducing material wastage.

One aspect of the disclosure is to provide a scalp structure that reduces the overall cost associated with the training of a hair stylist.

These aspects are provided by a scalp structure of claim 1. The scalp structure is configured to be removably coupled with a face structure of a mannequin head to facilitate a hair styling training to a person. The scalp structure includes a plurality of hair strands and has a retention structure adapted to facilitate the removable coupling of the scalp structure with the face structure of the mannequin head. The retention structure includes one of a protrusion or a ring to enable an easy engagement and disengagement of the scalp structure with the face structure.

In some embodiments, the retention structure includes the protrusion.

In some embodiments, the protrusion includes a cylindrical portion extending forwardly of a body of the scalp structure and a disc portion arranged at a free end of the cylindrical portion.

In some embodiments, the disc portion includes a substantially oval shape to prevent an undesired disengagement of the scalp structure and the face structure.

In some embodiments, the scalp structure includes a lip extending along an outer edge of the body of the scalp structure. The lip facilitates the engagement of the scalp structure with the face structure in a correct orientation.

### BRIEF DESCRIPTION OF THE ACCOMPANYING DRAWINGS

Having thus described example embodiments of the present disclosure in general terms, reference will now be made to the accompanying drawings, which are not necessarily drawn to scale, and wherein:
FIG. 1 illustrates a perspective view of a mannequin head, in accordance with an embodiment of the disclosure;
FIG. 2 illustrates an exploded view of the mannequin head of FIG. 1 having a face structure and a scalp structure, in accordance with an embodiment of the disclosure; and
FIG. 3 illustrates an engagement structure of the face structure with a ring of the engagement structure deformed into an elliptical shape, in accordance with an embodiment of the disclosure.

### DETAILED DISCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatus and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. The use of any term should not be taken to limit the spirit and scope of embodiments of the present disclosure.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

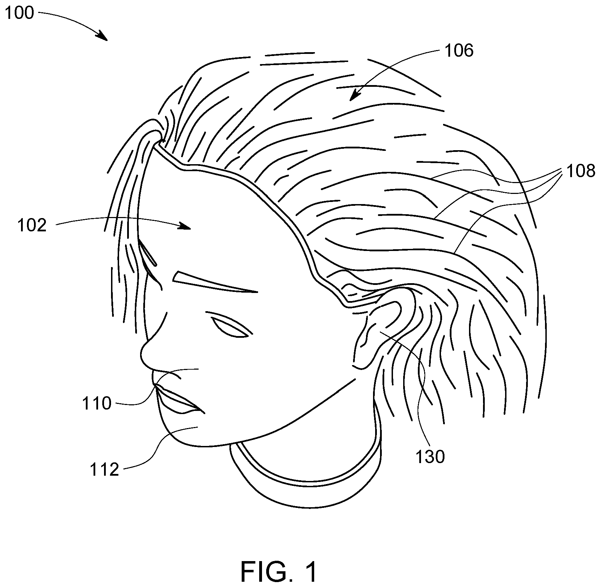

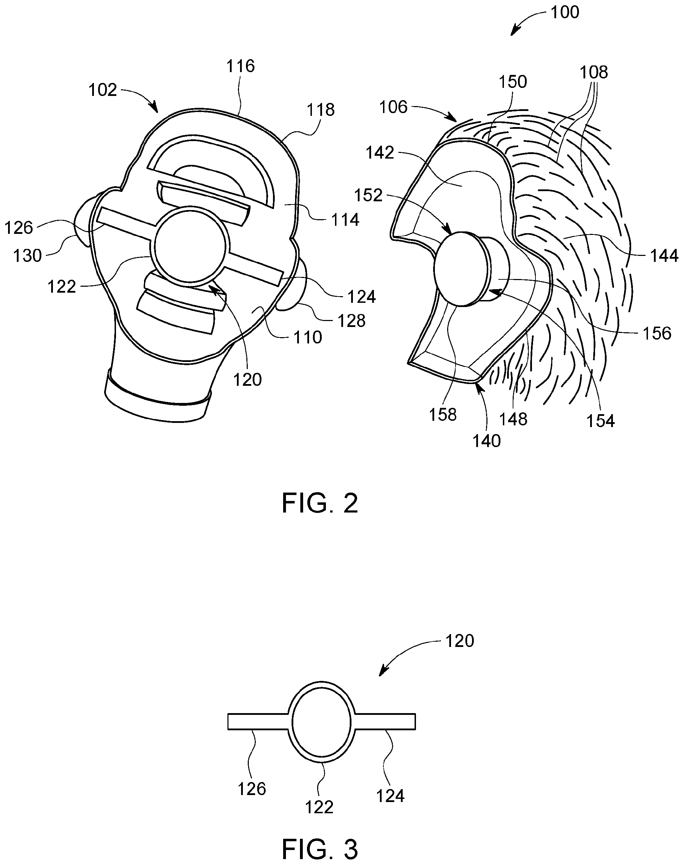

Referring to FIG. 1, a mannequin head 100 for facilitating hairstyling training to a person is shown. The mannequin head 100 includes a face structure 102 and a scalp structure 106 having a plurality of hair strands 108 and removably coupled to the face structure 102. The face structure 102 mimics the face of a human and includes a body 110 having a front portion 112 including a plurality of features mimicking various facial features of a human face and a rear portion 114 (shown in FIG. 2) disposed opposite to the front portion 112. An outer edge 116 is defined at a junction of the face structure 102 and the scalp structure 106, and the face structure 102 includes a seat 118 extending rearwardly of the outer edge 116 of the face structure 102. To facilitate a removable coupling of the face structure 102 with the scalp structure 106, the face structure 102 includes an engagement structure 120 attached at a rear of the face structure 102.

In an embodiment, the engagement structure 120 includes a ring 122 and a pair of arms 124, 126 extending in a lateral direction to the ring 122 from two ear portions 128, 130 of the face structure 102. As shown, the pair of arms 124, 126 includes a first arm 124 arranged on a first side of the ring 122 and connecting the ring 122 to a first ear portion 128 and a second arm 126 disposed on a second side of the ring 122 and connecting the ring 122 to a second ear portion 130. Accordingly, the arms 124, 126 are arranged diametrically opposite to each other and extend radially outwardly from the ring 122 in opposite directions. It may be appreciated that the arms 124, 126 are rigid arms relative to the ring 122 and facilitate a deformation of the ring 122 when a user compresses the ear portions 128, 130 and moves the ear portions 128, 130 towards each other. As the ring 122 is made of a relatively flexibly material, the ring 122 is configured to regain its original shape upon removal of the compression force. It may be appreciated, the ring 122 includes a circular shape (as shown in FIG. 2) in an undeformed state, and is configured to deform into an elliptical shape (as shown in FIG. 3) under the compression force. In the illustrated embodiment, the arms 124, 126 are arranged such that the ring 122 deforms into a vertically oriented elliptical ring upon application of the compression force on the ear portions 128, 130. The ring 122 is deformed into the elliptical/oval shape to enable the engagement and the disengagement of the face structure 102 with the scalp structure 106.

The scalp structure 106 includes a body 140 defining a front surface 142 and a rear surface 144, and the plurality of hair strands 108 are attached to the rear surface 144. Further, the scalp structure 106 includes a lip 150 arranged at an interface of the front surface 142 and the rear surface 144 and extends forwardly of an edge 148 defined at the junction of the front surface 142 with the rear surface 144. The lip 150 is configured to rest on the seat 118 of the face structure 102 to enable the assembly of the face structure 102 with the scalp structure 106 in a correct orientation. Moreover, the scalp structure 106 includes a retention structure 152 adapted to be removably engaged with the engagement structure 120 to enable the removable coupling/engagement of the scalp structure 106 with the face structure 102. As shown in FIG. 2, the retention structure 152 includes a protrusion 154 extending forwardly of the front surface 142 of the scalp structure 106 and may be disposed substantially centrally to the front surface 142. In the illustrated embodiment, the protrusion 154 includes a cylindrical portion 156 coupled to the front surface 142 and extending forwardly of front surface 142 and a disc portion 158 attached to a free end of the cylindrical portion 156. The disc portion 158 includes a substantially elliptical/oval shape and configured to be inserted inside the ring 122 to facilitate the removable coupling of the scalp structure 106 with the face structure 102.

In an embodiment, the face structure 102 and the scalp structure 106 may be made of ABS plastics material. However, other suitable plastic material, such as polyvinyl chloride (PVC) may be used. In some embodiments, the face structure 102 and the scalp structure 106 are made hollow and filled with a foam or other filler in order to maintain their shape and are not subject to damage by water or other fluid intrusion. In some embodiments, the plurality of hair strands 108 includes human hair, animal hair, a material that imitates hair, or a combination of two or more of these.

A method of coupling the scalp structure 106 to the face structure 102 is now described. To removably couple or decouple the scalp structure 106 to the face structure 102, a user applies the compression force on the body 110, i.e., the ear portions 128, 130, of the face structure 102. Under application of the compression force, the arms 124, 126 of the engagement structure 120 moves towards each other, thereby deforming the ring 122 into the elliptical/oval shape similar to the shape of the disc portion 158 of the protrusion 154 of the scalp structure 106. Upon deforming the ring 122, the user pushes the scalp structure 106 towards the face structure 102, resulting into an insertion of the disc portion 158 inside the ring 122, and therefore the engagement of the scalp structure 106 with the face structure 102. Also, for engaging the face structure 102 with the scalp structure 106, the user aligns the lip 150 of the scalp structure 106 with the seat 118 of the face structure 102. In an assembly of the scalp structure 106 with the face structure 102, the ring 122 is disposed between the disc portion 158 and the front surface 142 of the scalp structure 106, and the lip 150 is arranged resting on the seat 118 of the face structure 102.

For disengaging the scalp structure 106 from the face structure 102, the ear portions 128, 130 (i.e., body 110) are compressed, causing the deformation of the ring 122 into the elliptical/oval shape. Thereafter, the user pulls the scalp structure 106 in the rearward direction removing the protrusion 154 (i.e., disc portion 158) from the ring 122, disengaging the scalp structure 106 from the face structure 102.

The advantages of the mannequin head 100 are now explained. The mannequin head 100 uses the protrusion 154 as the retention structure 152 and the ring 122 as the engagement structure 120 to facilitate easy attachment and disengagement of the scalp structure 106 with the face structure 102. Moreover, this arrangement allows the scalp structure 106 to be quickly removed and replaced when necessary. Further, the use of removable scalp structure 106 with the face structure 102 reduces material wastages, associated cost and storage space/weight, as the face structure 102 of the mannequin head 100 is reused, while the scalp structure 106 is disposed of after use.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A mannequin head (100) for facilitating a hairstyling training, comprising:
a face structure (102) adapted to depict a human face and including an engagement structure (120); and
a scalp structure (106) including a plurality of hair strands (108) and having a retention structure (152) removably engaged with the engagement structure (120) to removably couple the scalp structure (106) with the face structure (102),
**characterized in that**
the engagement structure (120) includes one of a protrusion or a ring arranged at a rear of the face structure (102), and
the retention structure (152) includes other of the protrusion or the ring.

2. The mannequin head (100) of claim 1, wherein the engagement structure (120) includes the ring (122) and the retention structure (152) includes the protrusion (154).

3. The mannequin head (100) of claim 2, wherein the protrusion (154) includes a cylindrical portion (156) extending forwardly of a body (140) of the scalp structure (106) and a disc portion (158) arranged at a free end of the cylindrical portion (156).

4. The mannequin head (100) of claim 3, wherein the disc portion (158) includes a substantially oval shape.

5. The mannequin head (100) of any one of claims 2 to 4, wherein the engagement structure (120) includes a pair of arms (124, 126) connecting the ring (122) with a body (110) of the face structure (102), wherein the arms (124, 126) are arranged diametrically opposite to each other and extend outwardly of the ring (122) to the body (110) of the face structure (102).

6. The mannequin head (100) of claim 5, wherein the ring (122) is a flexible ring, and the arms (124, 126) are relatively rigid arms, wherein the ring (122) is configured to deform upon compression of the body (110) of the face structure (102) to enable the removal of the scalp structure (106) from the face structure (102).

7. The mannequin head (100) of any one of preceding claims, wherein
the face structure (102) includes a seat (118) extending along a periphery of the body (110) of the face structure (102), and
the scalp structure (106) includes a lip (150) extending along an outer edge (148) of the body (140) of the scalp structure (106) and resting on the seat (118) of the face structure (102).

8. A scalp structure (106) configured to be removably coupled with a face structure (102) of a mannequin head (100) for facilitating a hairstyling training, wherein the scalp structure (106) comprising:
a plurality of hair strands (108) and a retention structure (152) adapted to facilitate the removable coupling of the scalp structure (106) with the face structure (102) of the mannequin head (100),
**characterized in that**
the retention structure (152) includes one of a protrusion or a ring.

9. The scalp structure (106) of claim 8, wherein the retention structure (152) includes the protrusion (154).

10. The scalp structure (106) of claim 9, wherein the protrusion (154) includes a cylindrical portion (156) extending forwardly of a body (140) of the scalp structure (106) and a disc portion (158) arranged at a free end of the cylindrical portion (156).

11. The scalp structure (106) of claim 10, wherein the disc portion (158) includes a substantially oval shape.

12. The scalp structure (106) of any one of preceding claims further including a lip (150) extending along an outer edge (148) of the body (140) of the scalp structure (106).
